# EUROPEAN PATENT APPLICATION

(11) **EP 0 678 809 A2**
(43) Date of publication of application: **25.10.1995**
(21) Application number: 95104991.5
(22) Date of filing: 04.04.1995
(51) Int. Cl.: G06F 9/44

(54) **System for batch data analysis automation**

(30) Priority: 13.04.1994 US 226925
(71) Applicant: Becton Dickinson and Company, Franklin Lakes, New Jersey 07417-1880 (US)
(72) Inventor: Thiel, Daniel E., Pleasanton, CA 94588 (US); Mickaels, Ronald A., Mountain View, CA 94043 (US); Bierre, Pierre, Redwood City, CA 94063 (US)
(74) Representative: Selting, Günther, Dipl.-Ing.

(57) **Abstract**

This invention provides a simple, flexible, and editable method of delegating work flow for automated batch data analysis in a multi-layer architecture of process engines and their associated protocol documents. The method employs inputting editable data analysis protocols into a processor, containing a generic process-engine, and combining these protocols to form fields, which specify batch work flow objects. By use of a user-processor interface, a user can then select the desired object, and thereby instruct the processor to run the protocols which make up that object.

## Description

### BACKGROUND OF INVENTION

A central problem in the automation of data analysis applied to large batches of datafiles (i.e., batch data analysis) is the manner in which the workload gets delegated to the computer. Ideally, the specification of process should support incremental delegation, i.e., the ability to extend the repertoire of autonomous behavior by building off of simpler behaviors which have already been successfully delegated. This process should ideally emulate the way a supervisor hands off increasingly complex work to his or her subordinate with the accumulation of work experience. Implicit to incremental delegation is the ability to assign names to familiar tasks, treating them as abstract units deserving either no elaboration, or only slight modification. Novel combinations of familiar behaviors thus may be pieced together without having to re-specify the familiar behaviors.

The ideal, open-ended, incremental delegation of work to automated data analysis as described above, has not yet been solved theoretically, nor achieved in practice. Such a system would have to possess "human-like" faculties for recombinant novelty in thought, language and behavior. However, among the successes to date in orchestrating some smaller degree of extensible repertoire of behavior, there are several distinct approaches which have been utilized. These include:
1) Formal-language programming systems (both compiled and interpreted),
2) Scripting systems; and
3) Record-playback systems (also known as mousetracks).

In analyzing the differences between, and strengths and weaknesses of each of these approaches, there is a major tradeoff between simplicity (accessibility) and power (extensibility); i.e., as systems become more complex (less accessible), they generally have more extensibility, and vice versa. These tradeoffs pose major problems for the practitioner as, ideally, both parameters should be maximized. Several approaches currently in use are described, briefly, below:
1) Formal language programming systems, e.g., C, Modula, Fortran or Basic, confer the greatest plasticity in molding machine action to human purpose (and, therefore, the greatest extensibility of the approaches) however they are virtually inaccessible to all but a small cadre of highly technically-skilled programmers. This drawback limits the suitability of such programmatic interfaces as a means of offering automation plasticity to a wider audience of computer users.
2) Scripting systems, e.g., AppleScript, Mathematica, Frontier, Excel, are formal language programming systems which have been modified and designed for greater accessibility to non or less skilled programmers. They do not contain all the features of data abstraction found in formal programming languages, but provide run-time variables and basic flow-of-control mechanisms for sequencing, iteration, and conditional branching and, of course, the naming of routines one wishes to reuse. However, these systems are less flexible than formal programming systems and, thus, less extensible. Further, while these systems are simpler than formal programming, in most scripting systems, one can write a script that does not compile or run correctly.
3) Record-Playback systems e.g., QuickKeys or BD Lysys MouseTRAX, superimpose upon the mouse and/or keyboard interface the ability to record segments of user-interface activity, and then playback these sequences at a later time. This approach has the advantage of accessibility (simplicity) -- if the user knows how to operate the features of a piece of software, he or she can record sequences of such operations for later uses. The major limitation of record-playback systems is that they do not provide means for making even slight modifications to a familiar sequence -- the entire sequence of activity must be modified and re-recorded to capture a modification, i.e. the once made recording is not editable. Another serious limitation is the inability of the recording to handle unforeseen events during playback, such as not finding a file that the recording expects to be in a certain location.

Because of the drawbacks, no standard system has yet been specified or designed to maximize accessibility and power. The users have had to be content with the drawback of the system most suited to their particular level of expertise and applications.

### SUMMARY OF INVENTION

This invention presents a new approach to data analysis by use of a multilayer protocol-document system, for use in applications where data is analyzed especially where large volumes of data are analyzed. An example of such an application is the one described in U.S. Patent Application Serial No. 751,020 filed August 28, 1991 which application is incorporated herein by reference. The system obliges the user to specify a given process in terms of a set of protocols. These protocols depend on a generic process-engine which "knows" very generally the basics of the process to be carried out, but which needs to be filled in with specifics before it can do anything; These specifics are retained in the protocol.

To run the process specified by the protocol, the protocol is downloaded into the generic process-engine and run to completion. The protocols are developed by the user in an object-oriented document format, i.e., each document consists of a set of objects, where each object consists of a related set of fields, and whereby every field of every object is editable.

In order to specify the higher-level process of which protocols get downloaded to analyze which data, the same protocol-engine architecture can be repeated at a higher level of process abstraction. Thus, a variety of levels of processes can be downloaded by the same generic batch process engine, which engine is instructed by the downloaded protocol. The multilayer architecture is tied together by virtue of the fact that the batch protocol specifies a sequence of lower-level protocols to be downloaded in their lower-level process engine.

The advantages of this approach relative to the prior art described above in 1-3 are:
a) process variables are fully editable to the extent that the protocol suitably captures them, b) the likelihood of the user devising a protocol which crashes its engine or is otherwise unoperable can be easily engineered out of the system, c) in a manner accessible to a wide array of computer users, a complex process may be specified a little at a time, as a plurality of protocols and previously run processes may be reused in a new context through copying and slight modification of existing protocols.

These advantages more than offset the fact that the process-engines utilized are special-purpose, in that they are provided with the basics of a given process, and thus, lack the broad versatility of process (expressivity) afforded by formal programming language, and to a lesser extent scripting languages.

However, at least in automation environments which can be circumscribed by a small number of generic processes, multilayer protocol-document systems represent an advance over formal programming language and scripting systems (easier to learn to use, more robust in the hands of non-programmers), and over record-playback systems (process components are editable and thus more easily reusable). Considering the initial uphill obstacle of learning a formal programming or scripting language, and the inflexibility and brittleness of record-playback systems, multilayer protocol-document systems represent a significant advance over prior art in the arena of automation systems software for batch data analysis process control.

In a typical application, the user will define a plurality of fully editable protocols, each of which comprises a set of instructions capable of being run by a generic process-engine contained within the processor (e.g., a computer). These protocols are then loaded into the processor and combined by the user to define fields, which fields can be grouped into sets to define objects. These objects are accessible to the user by means of a user-processor interface (e.g., keyboard, mouse, etc.). Thus, the user can "instruct" the system to run a set of protocols by accessing the object. Further, since the protocols are editable, modifications of the object processes can be easily achieved.

### BRIEF DESCRIPTION OF THE FIGURES

Figure 1 presents an illustration of the principal user-interface controls for batch data analysis.

Figure 2 presents an illustration of the user-interface of Figure 1, modified by varying high level parameters.

Figure 3 presents the plots obtained from the CD3, CD4, CD8, A1 protocol of Figure 2.

Figure 4 presents the plots obtained from the protocol illustrated in Figure 3, modified by the addition of an additional cell population to the method.

Figure 5 presents a flow diagram for the batch processing engine.

### DETAILED DESCRIPTION OF THE INVENTION

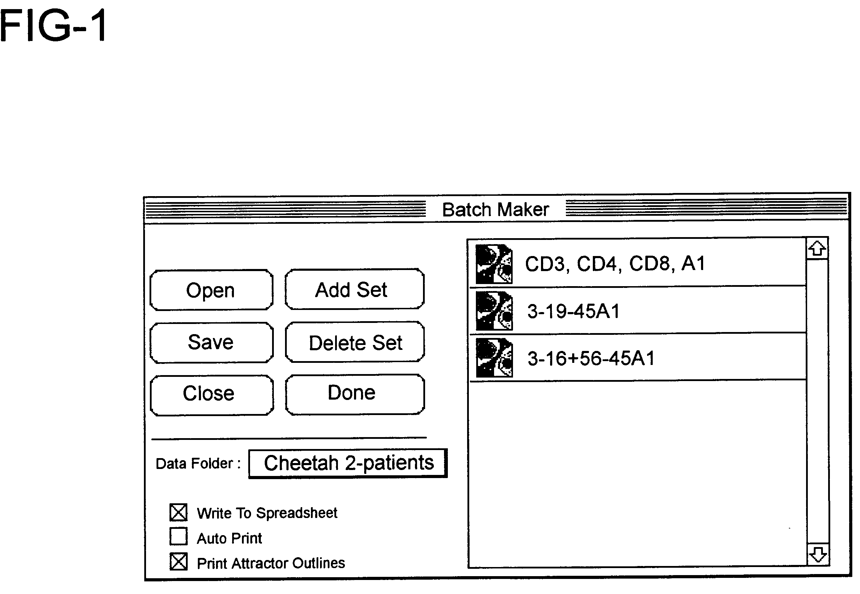

Figure 1 illustrates the principal user-interface controls for specifying a batch data analysis protocol at a high-level of abstraction. For example, on the right side of the dialog, the user assigns finished low-level analysis protocols to slots for processing a sequence of stained cell preparation recordings. Nothing other than the name of each protocol and its sequence position is known at this high-level of specification (a file system path is specified in the internals of the high-level, batch protocol). At any time (except during the running of a batch analysis), an underlying analysis protocol document may be opened and modified. The batch process may be rerun, and the underlying analysis protocol will reflect the new behavior. Because the batch process behavior has been sequestered into a higher-level protocol, and the individual tube analysis behavior has been sequestered into separate structures, there are no dependencies that restrict the combined behavior that can be specified. This property affords the multilayer document scheme a degree of versatility resembling a programmable system, without any requirement for a formal language programmer interface.

To better illustrate the versatility of the multilayer protocol system, and its ability to tolerate modification examples of the effects through a combination of low-level and high-level protocol edits.

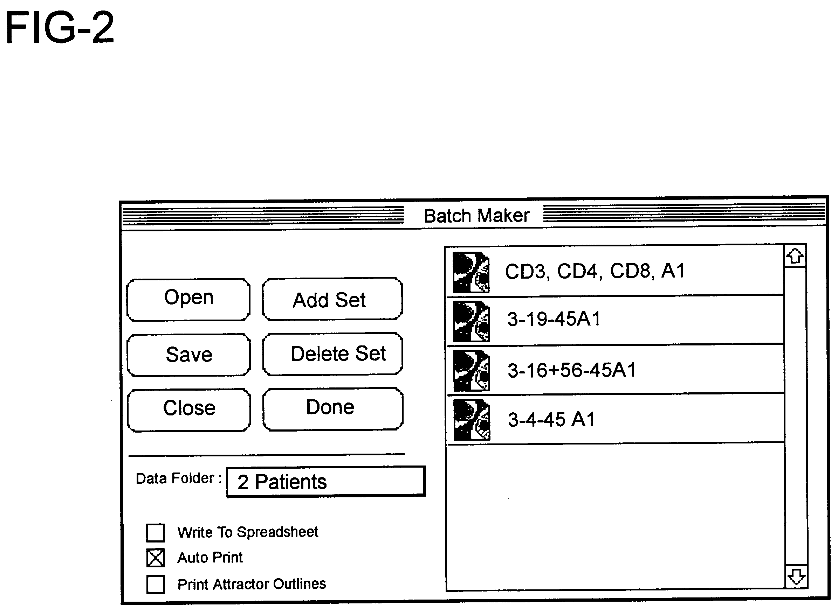

Figure 2 presents the principal user interface, modified by a change to high level parameters. Several high level editions to the batch process from the previous configuration in (Figure 1) are on the right-hand side. An additional analysis protocol document has been added to the existing list of protocols. It can also be noted that other input and output parameters have been changed for the batch protocol. The input parameter specifying the target data folder has been changed, thus redirecting the batch process to analyze a different input fileset. The output parameters have been changed to request printer output instead of spreadsheet and Attractor outlines.

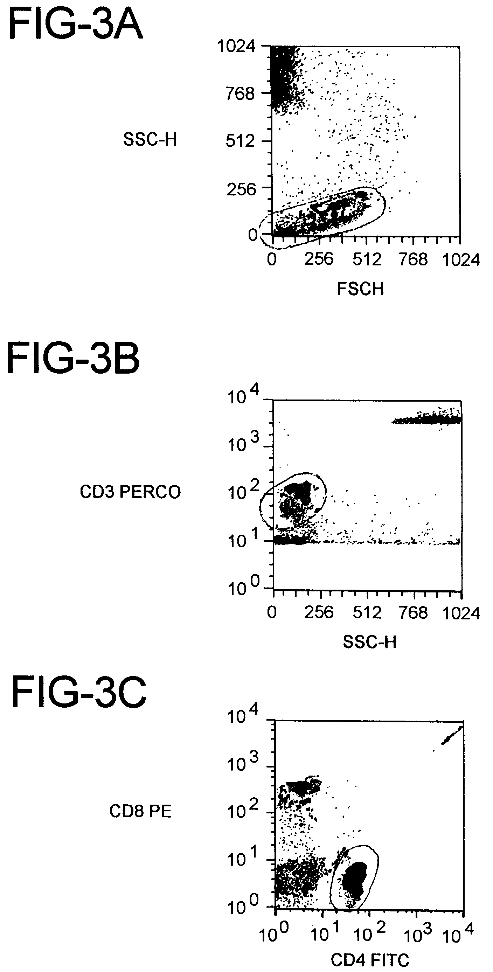

Figure 3 illustrates one of the analysis protocols during execution of the batch process specified in Figure 2. Principally, the CD3,CD4,CD8,A1 protocol consists of a set of data views and a set of populations (a population hierarchy). A generic low-level engine executing the CD3,CD4,CD8,A1 protocol on the VN09013001 data file classifies the data, and renders colored scatter plots and population statistics (not shown). The Cancel, Resume, and Pause buttons offer high-level interrupt control over the batch process flow of control.

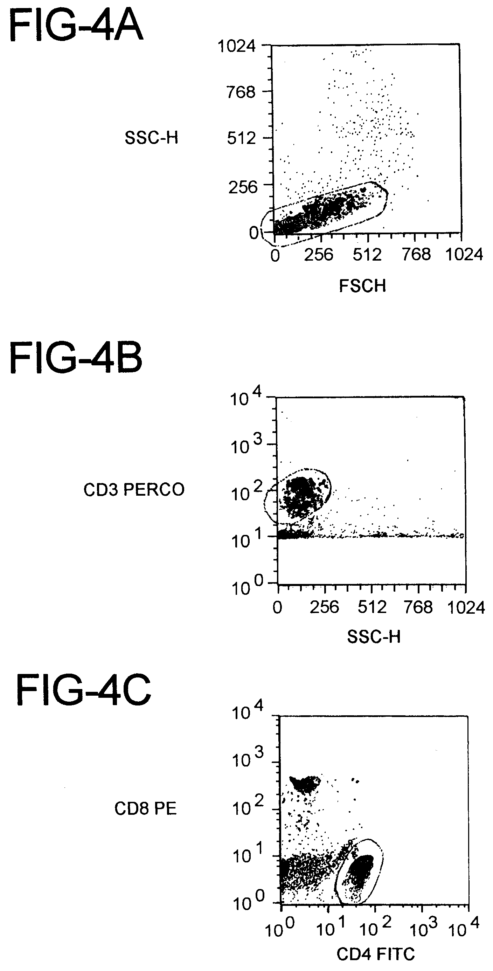

Figure 4 shows the same batch process employing a slightly modified version of the same analysis method. There is an additional target population added to the analysis method (Untitled, yellow population). The change to the analysis method required no change to the batch process protocol.

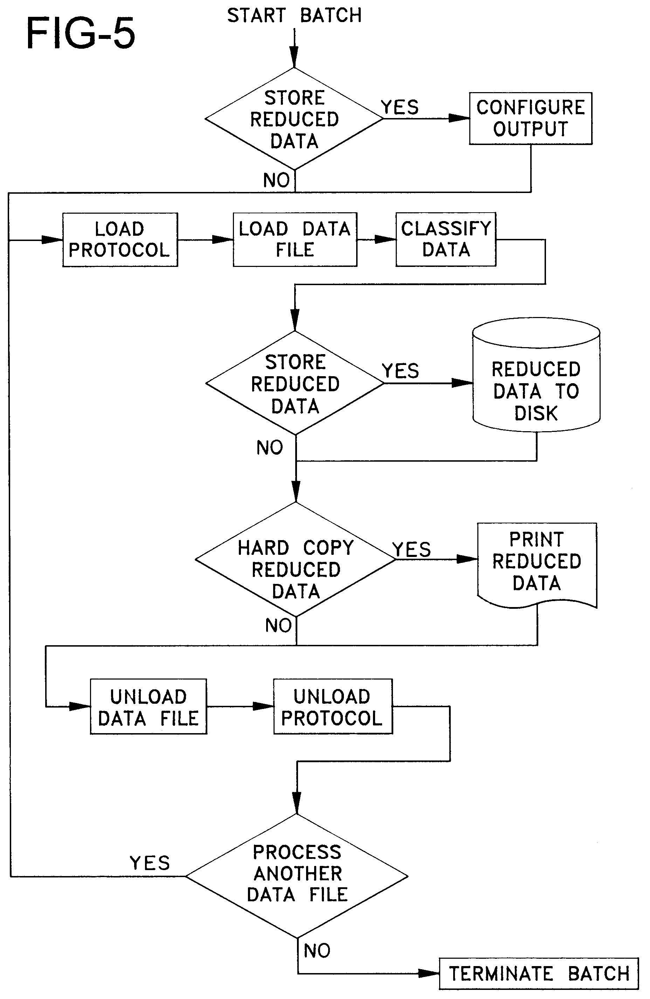

Once a batch protocol has been designed, it is saved in document form, and called from an analysis application to begin the batch processing. Similarly, the underlying data analysis protocols are stored as files. Since both types of protocols are file based, there are neither time nor physical restrictions, such as networks or remote computers, that can be superimposed onto the landscape of the analysis environment. Figure 5 provides a simple flow diagram for the batch processing engine.

It is apparent that may modifications and variations of this invention as herein set forth may be made without departing from the spirit and scope hereof. The specific embodiments described are given by way of example only and the invention is limited only by the terms of the appended claims.

## Claims

1. A method of delegating work flow for automated batch data analysis in a multi-layer architecture of process engines and their associated protocol documents comprising:
(i) specifying a plurality of editable data analysis protocols, each of said protocols comprising a set of instructions which can be carried out by a generic process-engine; and
(ii) downloading said plurality of protocols into a processor, said processor comprising a generic process-engine; and
(iii) combining said protocols to form a set of fields, which set specifies a user-definable batch work flow object; and
(iv) accessing said object by means of a user-processor interface such that the selection of the object will instruct the processor to run the protocols which make up that object.

2. The method of Claim 1 wherein the protocols are downloaded by means of a generic batch process-engine.

3. The method of Claim 1 wherein said processor is a computer.
